# EUROPEAN PATENT APPLICATION

(11) **EP 4 306 589 A2**
(43) Date of publication of application: **17.01.2024**
(21) Application number: 23207446.8
(22) Date of filing: 19.12.2017
(51) Int. Cl.: C08K 3/013

(54) **POLYURETHANE COMPOSITION FOR CREATING FLOORING PATTERNS**

(30) Priority: 19.12.2016 EP 16205032
(62) Divisional of application: 17825496.7
(71) Applicant: Sika Technology AG, 6340 Baar (CH)
(72) Inventor: VAN DER WILT, Remo, 7963 PG Ruinen (NL); NETTEKOVEN, Oscar, 6665 LL Driel (NL)
(74) Representative: Sika Patent Attorneys

(57) **Abstract**

The present invention relates to a polyurethane based composition comprising a polyol component (A) comprising at least one polyol, and a hardener component (B) comprising at least one polyisocyanate. The polyurethane composition further comprises at least one metallic pigment (MP) selected from the group consisting of metallic effect pigments (MPM) and pearlescent pigments (MPM). The polyurethane composition is used in applications related to decorative flooring, it is ideally suited to create wood or concrete like floors.

## Description

### Technical field

The present invention relates to a polyurethane composition, and more particularly to a method of applying the polyurethane composition on a surface for creating decorative floorings or flooring materials.

### Background of the invention

In construction industry, especially for flooring applications, concrete and natural materials such as cut stones, rocks, woods, marbles and bricks are frequently used. However, the use of such materials is associated with lots of challenges and disadvantages, with expensive production, high transportation cost, installation difficulties because of heavy weights, poor attachment to substrates, discoloration and high maintenance cost.

Construction industry is facing the issue of providing flooring surfaces that have specific functional characteristics, in combination with decorative effects that appeal to the eyes. Recent trend in the industry is to use polymeric material as an alternative to natural flooring materials. This material is manufactured to appear like natural materials such as wood and natural stone, yet it is made up of synthetic materials. Such floorings are relatively cheaper to install and maintenance cost is very low.

Although polymeric floorings imitate the appearance of natural materials, most of such floorings are not realistic in texture. Therefore, people can easily realize that the flooring material is not made up of natural materials and is just an imitation. In most of the polymeric floorings, textured appearance or decorative pattern is present only on the top surface of the flooring material. Therefore, if the top layer of the floor gets harmed (for example by scratching, rubbing, spillage etc.), the textured appearance or decorative pattern of the polymeric flooring gets affected.

A number of attempts were made to create flooring patterns or textures with realistic appearance using novel polymeric materials (or compositions) and methods of application. One such attempt to create patterns or textured flooring surfaces involves the use of two different 2K-PU compositions. The first 2K-PU composition contains a first color and the second 2K-PU composition contains a second color. In order to generate patterns both the first and the second 2K-PU compositions are very lightly and very inhomogeneously mixed and are then applied to the surface thereby creating the desired patterns. However, this method fails to provide realistic decorative effect/pattern.

It is difficult to obtain synthetic floorings having realistic appearance of concrete or natural materials. Therefore, there is a need to create novel polymeric compositions and methods for creating floors or flooring materials with decorative patterns that give realistic impression of concrete or natural materials.

### Summary of the invention

The present invention is made in view to overcome the problems described above, and one of the objects of the present invention is to provide a polyurethane composition comprising a polyol component (A), a hardener component (B) and a metallic pigment (MP) selected from the group consisting of metallic effect pigments (MPM) and pearlescent pigments (MPP). Another object of the present invention is to create concrete-like and wood-like patterns on cured polyurethane composition that look like real concrete and wood respectively.

To solve the problem, the present invention provides a polyurethane composition comprising a polyol component (A) comprising at least one polyol, and a hardener component (B) comprising at least one polyisocyanate, whereby the polyurethane composition further comprises at least one metallic pigment (MP) selected from the group consisting of metallic effect pigments (MPM) and pearlescent pigments (MPP).

In the polyurethane composition of the invention, preferably the polyol component (A) comprises the at least one metallic pigment (MP) selected from the group consisting of metallic effect pigments (MPM) and pearlescent pigments (MPP).

The present invention also provides a method for applying a mixed polyurethane composition, preferably as a flooring material. The method comprises the steps of providing a space where the polyurethane composition is applied, mixing components (A) and (B) of the polyurethane composition to obtain a mixed polyurethane composition, applying the mixed polyurethane composition on a desired location and in a desired shape within the space provided, creating a pattern on the surface of the applied mixed polyurethane composition by contacting the applied mixed polyurethane composition with an object and allowing the applied mixed polyurethane composition cure.

Further, the method for applying the mixed polyurethane composition is preferably used to create floors and/or ship decks.

The present invention also relates to the use of metallic pigments (MP) selected from the group consisting of metallic effect pigments (MPM) and pearlescent pigments (MPP) in a mixed polyurethane composition comprising a polyol component (A) comprising at least one polyol, and a hardener component (B) comprising at least one polyisocyanate, to create concrete-like or wood-like appearing patterns on the surface of the mixed polyurethane composition upon, before curing of the polyurethane composition, creating a pattern on the surface of the applied mixed polyurethane composition by contacting the applied mixed polyurethane composition with an object.

Further, the polyurethane composition of the invention is preferably used as a flooring material and a casting material.

Further aspects of the present invention are subjects of further independent claims. Particularly preferred embodiments are subjects of the dependent claims.

The present inventors found that the polyurethane composition of the invention can be used to create concrete-like and wood-like patterns on cured polyurethane compositions that look like real concrete and wood respectively.

### Brief Description of the Drawings

Fig. **1a** and Fig. **1b** depict photographic images of wood-effect created by using mixed polyurethane composition comprising metallic pigment Chromal I (aluminiumpulver) and a mixed polyurethane composition comprising metallic pigment STAPA metallic 501 (aluminiumpaste) respectively.
Fig. **2** depicts photographic images of wood-effect created by using mixed polyurethane composition containing pearlescent pigment (MagnaPearl) with varying particle sizes.
Fig. **3** depicts photographic images of wood-effect created by using mixed polyurethane compositions containing papaya pigment with varying particle concentration.
Fig. **4** and **5** depict photographic images of wood-effect created by using mixed polyurethane compositions containing varying amount of black and white non-metallic pigments (NoP).
Fig. **6a** and Fig. **6b** depict photographic images of wood-effect created by using mixed polyurethane compositions prepared with and without using dispersing agents, respectively.
Fig. **7** depicts photographic images of wood-effect created by using mixed polyurethane compositions containing varying amount of rheology additives.
Fig. **8** depicts photographic images of wood-effect created by using mixed polyurethane compositions containing the polyol component of different storage time.
Fig. **9** depicts photographic view depicting creation of wood effect using objects/tools.
Fig. **10a** and Fig. **10b** depict photographic view of woodboards prepared without using the metallic pigment (i.e. Monocolor) and woodboards prepared with using the metallic pigment respectively.
Fig. **11a** and Fig. **11b** depict photographic view of the effect of sanding and topcoat on the woodboards prepared without using the metallic pigment (i.e. Monocolor) and woodboards prepared with using the metallic pigment respectively.
Fig. **12** and Fig. **13** depict photographic images of wood-effect created by using mixed polyurethane compositions with varying viscosities.
Fig. **14** depicts photographic image of concrete-like effect created by using mixed polyurethane compositions of the invention

### Detailed description of the invention

Thus, before describing the present invention in detail, it is to be understood that this invention is not limited to particularly exemplified systems or process parameters that may of course, vary. It is also to be understood that the terminology used herein is for the purpose of describing particular embodiments of the invention only, and is not intended to limit the scope of the invention in any manner.

In the context of the present invention, the following definitions may apply to the terms listed below, unless specified otherwise:
Compound names beginning with "poly" designate substances, which formally contain, per molecule, two or more of the functional groups occurring in their names. The compound can be a monomeric, oligomeric or polymeric compound. For instance, a polyol is a compound having two or more hydroxy groups, a polyisocyanate is a compound having two or more isocyanate groups.

The average molecular weight is understood to mean the number average molecular weight, as determined using conventional methods, preferably by gel permeation-chromatography (GPC) using polystyrene as standard, styrenedivinylbenzene gel with porosity of 100 Angstrom, 1000 Angstrom and 10000 Angstrom as the column and tetrahydrofurane as a solvent, at 35°C.

In the context of this invention, the term "curing" means that the composition becomes harder or sets-in as a result of a chemical change/reaction.

A "Multi component composition" refers to a curable composition in the present document, the components are present in two or more different components stored in separate containers and are storage stable in each case for itself. Only shortly before or during the application of the composition, the two or more components are mixed together, whereupon the mixed composition cures, the curing in some cases only runs through the action of moisture or is completed.

The term "filler" is meant to comprise any material, matter, component and/or composition added to thicken the coated or casted composition, support its structure and simply increase the volume of the composition and/or to lower the cost. Fillers are usually comprised of cheap and inert materials, such as one or more of talc, calcium carbonate, kaolin, lime, baryte, clay, etc.

The term "additive(s)" is meant to comprise a component, agent, composition and the like usually added in smaller amounts (e.g. less than 5%, 1%, 0.1 %, or 0.01 % of the total composition) and yet give a very significant effect on the product. Additives can comprise one or more of catalysts, adhesion promoters, UV stabilizers, biocides to fight microbial and/or plant growth or agents to impart anti-freeze properties. Often, composition and/or coating composition comprises one or more additives.

The viscosity of the polyurethane compositions is measured at 23°C using a Brookfield DV-E viscometer at 100 rpm using spindle #6 for viscosities below 9500 mPa.s and spindle #7 for viscosities of 9500 mPa.s and above.

The terms "concrete-like" and "beton-like" can be used interchangeably, and are meant to describe a concrete like texture, pattern or appearance.

The term "concrete" as used herein has a broad definition, mimicking its use in industry. It can refer to an adequately wetted concrete mixture, an insufficiently wetted concrete mixture, or a dry mix, and includes cementitious mixtures that themselves may include aggregate, gravel, fly ash, ground slag, silica fume, fibers and/or sand. The term concrete as used herein includes all types of cementitious material to which water has been or is to be added, including mortar, pervious concrete, flowable fill, ready-mixed concrete and bedding mix.

The term "particle size" as used herein preferably refers to the average particle size. The term "average particle size" here refers to the D₅₀ value of the cumulative volume distribution curve in which 50% by volume of the particles have a diameter which is smaller than the value. The average particle size or the D₅₀ value is preferably determined by laser diffractometry in the present invention.

The present invention relates in a first aspect to a polyurethane composition comprising:
A) a polyol component (A) comprising at least one polyol; and
B) a hardener component (B) comprising at least one polyisocyanate, whereby the polyurethane composition further comprises at least one metallic pigment (MP) selected from the group consisting of metallic effect pigments (MPM) and pearlescent pigments (MPP).

The composition used according to the invention comprises a polyol component (A) and a hardener component (B), i.e. the composition comprises two or more individual components. These components are stored separately in order to avoid spontaneous reaction. The components may be assembled together as a package. Prior to use, the components are combined with each other. When the components are mixed together, curing reactions begin so that the composition is to be processed within the open time after mixing the components. The composition preferably consists of two components. Optionally however, one or more additional components may be included for specific purposes. For instance, an additional component comprising non-metallic pigment (NoP) for coloring purposes.

Systems comprising organic binder components including a polyol component and a polyisocyanate hardener component suitable for flooring applications is known to the skilled person and commercially available, for instance products of Sika Schweiz AG. An example for a commercially available combination of a binder component comprising polyol and an isocyanate hardener component are Sikafloor^{®} products from Sika Schweiz AG, for example Sikafloor 3000, Sikafloor 327 and Sikafloor 330.

It is clear that the proportion of a certain ingredient in the mixture of the components depends on the content of this ingredient in the respective component and the mixture ratio of the components. In the following, ratios referring to ingredients in different components relate to suitable or correct proportions of each component according to operating instructions, i.e. to the mixing ratios to be used for mixing the components and, in use to the mixture of the components prepared.

In the following, the components of the composition used according to the invention are explained at the first.

### Polyol component (A)

The polyol component (A) comprises one or more polyols. Optionally, one or more additives may be added to polyol component (A). Polyol component (A) is preferably a liquid component. The polyol component (A) may be viscous but is generally pourable.

Examples of suitable polyols are polyoxyalkylenepolyols, also referred to as "polyetherpolyols", polyesterpolyols, polycarbonatepolyols, poly(meth)acrylate polyols, polyhydrocarbon-polyols, polyhydroxy-functional acrylonitrile/butadiene copolymers and mixtures thereof, in particular diols thereof, and mixtures thereof.

Examples of polyetherpolyols are polyoxyethylenepolyols, polyoxypropylenepolyols and polyoxybutylenepolyols, in particular polyoxyethylenediols, polyoxypropylenediols, polyoxybutylenediols, polyoxyethylenetriols and polyoxypropylenetriols. Polyoxyalkylenediols or polyoxyalkylenetriols having a degree of unsaturation of less than 0.02 meq/g and having an average molecular weight in the range from 1000 to 30000 g/mol and polyoxyethylenediols, polyoxyethylenetriols, polyoxypropylenediols and polyoxypropylenetriols having an average molecular weight of from 400 to 8000 g/mol are suitable.

Further examples of polyetherpolyols are so-called ethylene oxide-terminated ("EO-endcapped", ethylene oxide-end-capped) polyoxypropylenepolyols, styrene-acrylonitrile-grafted polyetherpolyols, e.g. Lupranol^{®} from BASF Polyurethanes GmbH, Germany.

Particularly preferred polyols to be used in the present invention are polyhydroxy-functional fats and oils, for example natural fats and oils, such as castor oil, or polyols obtained by chemical modification of natural fats and oils, so-called oleochemical polyols. Castor oil is particularly preferred as natural oil and castor oil is particularly preferred as basis for polyols obtained by chemical modification of natural fats and oils.

Examples of chemically modified natural fats and oils are polyols obtained from epoxypolyesters or epoxypolyethers obtained, for example, by epoxidation of unsaturated oils, by subsequent ring opening with carboxylic acids or alcohols, polyols obtained by hydroformylation and hydrogenation of unsaturated oils, or polyols which are obtained from natural fats and oils by degradation processes, such as alcoholysis or ozonolysis, and subsequent chemical linkage, for example by trans esterification or dimerization, of the degradation products thus obtained or derivatives thereof. Suitable degradation products of natural fats and oils are in particular fatty acids and fatty alcohols and fatty acid esters, in particular the methyl esters (FAME), which can be derivatized, for example, by hydroformylation and hydrogenation to give hydroxy-fatty acid esters.

The polyols mentioned above usually have a relatively high molecular weight, for instance, an average molecular weight of from 250 to 30000 g/mol, in particular from 1000 to 30000 g/mol, and/or an average OH functionality in the range from 1.6 to 3.

Further examples of suitable polyols are low molecular weight di- or polyhydric alcohols, e.g., with a molecular weight of less than 250 g/mol. Examples thereof are 1,2-ethanediol, 1,2- and 1,3-propanediol, neopentylglycol, diethylene glycol, triethylene glycol, the isomeric dipropylene glycols and tripropylene glycols, the isomeric butanediols, pentanediols, hexanediols, heptanediols, octanediols, nonanediols, decanediols, undecanediols, 1,3- and 1,4-cyclohexanedimethanol, hydrogenated bisphenol A, dimeric fatty alcohols, 1,1,1-trimethylolethane, 1,1,1-trimethylolpropane, glycerol, pentaerythritol, sugar alcohols, such as xylitol, sorbitol or mannitol, sugars, such as sucrose, other alcohols having a higher functionality, low molecular weight alkoxylation products of the abovementioned di- and polyhydric alcohols, and mixtures thereof.

While said low molecular weight di- or polyhydric alcohols may be used as the polyol, the use of the polyols mentioned above having a high molecular weight is preferred. In a preferred embodiment at least one high molecular weight polyol and at least one low molecular weight di- or polyhydric alcohol are used in combination. As mentioned, a low molecular weight polyol is considered to have a molecular weight of less than 250 g/mol, whereas a high molecular weight polyol is considered to have an average molecular weight of 250 g/mol or more.

In a preferred embodiment the polyol component (A) comprises at least one low molecular weight polyol, preferably in combination with at least one high molecular weight polyol, in particular castor oil.

Particularly preferred is a combination of one or more polyhydroxy-functional fats and oils, such natural fats and oils, or polyols obtained by chemical modification of natural fats and oils, in particular castor oil and polyols obtained by chemical modification of castor oil, and one, two or more low molecular weight di- or polyhydric alcohols. In such combinations, the one or more polyols having a high molecular weight are usually used in higher amounts than the at least one low molecular weight di- or polyhydric alcohol.

Preferably, the amount of the one or more polyols having a high molecular weight is between 90 - 99.5 weight-%, based on the total weight of all the polyols of the polyol component (A).

Preferably, the amount of the at least one low molecular weight di- or polyhydric alcohol is between 0.5 - 90 weight-%, based on the total weight of all the polyols of the polyol component (A).

Preferably, the amount of the sum of (the one or more polyols having a high molecular weight) and (the at least one low molecular weight di- or polyhydric alcohol) is between 50 - 98 weight-%, preferably between 50 - 90 weight-%, more preferably between 50 - 80 weight-%, most preferably between 55 - 70 weight-%, based on the total weight of the polyol component (A).

Preferably, the polyol component (A) further comprises inorganic and organic fillers, preferably selected from the list consisting of ground or precipitated calcium carbonates which are optionally coated with fatty acids in particular stearates, barite (heavy spar), talc, quartz powders, quartz sand, dolomites, wollastonites, kaolins, calcinated kaolins, molecular sieves and silicic acids including highly-dispersed silicic acids from pyrolysis processes.

Preferably, the particle size of the inorganic and organic fillers is 0.01-0.5 mm, more preferably 0.1-0.3 mm.

Preferably, the polyurethane composition contains less than 5 weight-%, preferably less than 2 weight-%, preferably less than 1 weight-%, preferably less than 0.5 weight-%, of components with a particle size of bigger than 2 mm, preferably bigger than 1 mm, more preferably more than 0.5 mm, based on total weight of the polyurethane composition.

Preferably, the amount of the inorganic and organic fillers is between 20 - 50 weight-%, preferably between 30 - 45 weight-%, based on the total weight of the polyol component (A).

Preferably, the polyol component (A) is essentially free of water. Preferably the amount of water is less than 0.5 weight-%, preferably less than 0.1 weight-%, more preferably less than 0.05 weight-%, based on the total weight of the polyol component (A).

Apart from the at least one polyol, the polyol component (A) may contain further additives. Such additives are commonly used, if desired, and typically known to the persons skilled in the art. Examples of optional further additives are plasticizers, stabilizers against heat light and UV radiation, flame retardants and biocides.

### Hardener component (B)

The hardener component (B) comprises one or more polyisocyanates. Hardener component (B) is preferably a liquid component. The hardener component (B) may be viscous but is generally pourable.

Such polyisocyanates are commercially available and widely used as hardener for polyols. Examples for suitable polyisocyanates are hexamethylene diisocyanate (HDI), HDI trimers such as Desmodur^{®}N 3600, toluene diisocyanate (TDI), isophorone diisocyanate (IPDI) such as Vestamat^{®}T 1890, methylene diphenyl diisocyanate and derivatives of these polyisocyanates, wherein HDI and its derivatives, and methylene diphenyl diisocyanate and its derivatives are preferred.

Monomeric and polymeric methylene diphenyl diisocyanate is most preferred. In the following, methylene diphenyl diisocyanate is abbreviated as MDI as usual. MDI is a useful compound, e.g. as a starting material for polyurethane production, and produced worldwide in millions of tons annually. A plurality of different product grades of MDI is available. "Methylene diphenyl diisocyanate" as this term is used in the present invention, include, depending on its grade, monomeric and polymeric methylene diphenyl diisocyanate.

MDI is available in the form of three different isomers, namely 4,4'-methylene diphenyl diisocyanate (4,4'-MDI), 2,4'-methylene diphenyl diisocyanate (2,4'-MDI), and 2,2'-methylene diphenyl diisocyanate (2,2'-MDI). Commercially available MDI can be classified into monomeric MDI (also designated MMDI) and polymeric MDI (PMDI) referred to as technical MDI. Polymeric MDI is the raw product of MDI synthesis containing MDI isomers and oligomeric species. Monomeric MDI is obtained from polymeric MDI by purification.

Monomeric MDI refers to "pure" MDI including products of a single MDI isomer or of isomer mixtures of two or three MDI isomers. The isomeric ratio can vary in wide ranges. For instance, 4,4'-MDI is a colorless to yellowish solid having a melting point of 39.5°C. Commercial monomeric MDI is often a mixture of 4,4'-MDI, 2,4'-MDI and typically very low levels of 2,2'-MDI.

Polymeric MDI includes oligomeric species. Usually MDI isomers are also included in polymeric MDI. Thus, polymeric MDI may contain a single MDI isomer or isomer mixtures of two or three MDI isomers, the balance being oligomeric species. Polymeric MDI tends to have isocyanate functionalities of higher than 2. The isomeric ratio as well as the amount of oligomeric species can vary in wide ranges in these products. For instance, polymeric MDI may typically contain about 30 to 80 weight-% of MDI isomers, the balance being said oligomeric species. As in the case of monomeric MDI, the MDI isomers are often a mixture of 4,4'-MDI, 2,4'-MDI and very low levels of 2,2'-MDI. Polymeric MDI is typically a brown or dark amber liquid at room temperature (23°C).

The oligomeric species are oligomers usually having a NCO functionality of 3 or higher. The oligomeric species are a result of the synthesis process and can be represented by the following formula 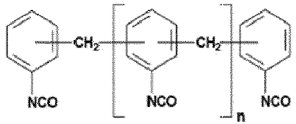 wherein n is 1 to 4 and higher. The amount of the homologues decreases with increasing chain length. The total content of homologues with n higher than 4 is generally not very high.

A wide variety of polymeric MDI grades is available with varying characteristics as to the number, type and content of isomers and oligomeric species, isomeric ratio, and weight distribution of the oligomeric homologues. These characteristics depend on type and conditions of synthesis and purification procedures. Moreover, the characteristics can be adjusted, e.g., by mixing different MDI grades according to the needs of the customer.

The hardener component (B) comprising at least one polyisocyanate may optionally comprise one or more further additives, e.g. solvents, in relatively small amounts, e.g. up to 20 or up to 10 weight-% of the additives all together, preferably up to 5 weight-% and more preferably up to 2 weight-% based on the total weight of the hardener component (B). Suitable solvents include but are not limited to esters, ketones, hydrocarbons and chlorinated hydrocarbons. If MDI is used, it is generally preferred however, that the hardener component (B) comprising an isocyanate hardener essentially consists of MDI, i.e. monomeric MDI and/or polymeric MDI, e.g. with an amount of other additives of less than 2 weight-%. Since the MDI products are technical products, they may, of course, include low quantities of impurities.

### Suitable proportions for the composition

Preferably, the ratio by weight of component (A) : component (B) is 5:1 to 2:1, more preferably 4:1 to 3:1.

The reaction of the one or more polyols and of the one or more polyisocyanates results in cured organic binder, which is a polyurethane.

Preferably the molar ratio between free NCO-groups and NCO-reactive groups, preferably OH-groups, in the composition of the invention before mixing is between 0.8 - 1.2, preferably 0.9 - 1.1.

The application temperature is e.g. from about 8 to 40°C, preferably from about 10 to 30°C.

### Metallic Pigment (MP)

The polyurethane composition of the present invention further comprises at least one metallic pigment (MP). Metallic pigments (MP) are the pigments that consists of metals and alloys. The metallic pigments used in the context of this invention are selected from the group consisting of metallic effect pigments (MPM) and pearlescent pigments (MPP). Most preferred, the metallic pigments used in the context of this invention are pearlescent pigments (MPP).

The metallic effect pigments (MPM) and pearlescent pigments (MPP) are the type of special effect pigments. The special effect pigments are recognized as class of compounds that manipulate light to create a visual effects.

Preferably, the polyol component (A) comprises at least one metallic pigment (MP) selected from the group consisting of metallic effect pigments (MPM) and pearlescent pigments (MPP).

The metallic effect pigments may consist of metals or alloys which are selected from the group consisting of aluminum, copper, zinc, tin, brass, iron, titanium, chromium, nickel, steel, silver and alloys and mixtures thereof. Preferably, the metallic effect pigments (MPM) used in the present invention are of nonferrous metals, preferably aluminum and copper, or alloys, preferably brass, most preferably aluminum. Particularly, preferred metallic effect pigments are aluminum flake and copper bronze flake.

Examples of such metallic effect pigments available commercially include "Chromal I", "Stapa^{®} Metallic", "Hydrolux", "Aloxal" and "Hydroian^{®}" from Eckart GMbH; and "Paliocrom^{®}" from BASF, Ludwigshafen, Germany. Particularly, preferred metallic effect pigments are flake shaped aluminium pigment "Chromal I" and an aluminum pigment paste "STAPA^{®} METALLIC 501".

The primary purpose of using metallic effect pigments in the polyurethane composition of the present invention is to produce optically attractive effects (light-dark or color flop).

Pearlescent pigments (MPP) are the type of metallic pigments that generally consists of platelets with high refractive index (at least in some regions in pigments with a layer structure) and high transparency. Thus, pearlescent effect pigments can be defined as transparent effect pigments which produce pearlescent or iridescent effects, and are based on platelets of low refractive index materials coated with a high refractive index material.

Pearlescent pigments (MPP) used in the industry are generally of layered pigment structures, especially of coated mica particles. Preferably, the mica is coated with metal oxides. More preferably, the mica surface is coated with a titanium dioxide (TiO₂) layer of defined thickness. Further, variations in the layer thickness produce a range of interference colors. For example, lowering of the titanium dioxide content or additional coating with Fe₂O₃ or Cr₂O₃ (if necessary without a TiO₂ layer) results in imparting further interesting color effects to pearlescent pigments (MPP).

Examples of such pearlescent pigments (MPP) available commercially include "MagnaPearl", "Chroma^{®}" and "Colibri^{®}", from BASF Chemie GmBH, "P1420|Papaya" from Torginol, Inc.; "Taizhu^{®}" from Taizhu Group Corporation; and "Ivioden^{®}" and "Iriodin^{®}" from Merck. Particularly preferred pearlescent pigments (MPP) are "MagnaPearl 1000", "MagnaPearl 2000" and "P1420|Papaya".

Preferably, the amount of pearlescent pigments (MPP) is 0.15 - 7 weight-%, preferably 0.2 - 6 weight-%, more preferably 0.2 - 3, more preferably 0.3 - 2.5, most preferably 0.5 - 2 weight-%, based on total weight of the polyurethane composition.

Preferably, the particle size of the pearlescent pigments (MPP) is from 2 - 300 µm, preferably 5 - 150 µm, most preferably 30 - 75 µm.

The level of metallic pigments present in the polyurethane composition of the present invention can vary dependent upon the other composition components, the desired color, and/or the end use of the polyurethane composition.

### Non-metallic Pigments (NoP)

The polyurethane composition of the present invention may contain non-metallic pigments (NoP) apart from the metallic pigments (MP). The use of these inorganic pigments is well documented for flooring and surface coating applications. Non-metallic pigments (NoP) are well known classes of chemicals that are used to color or modify the hue of a substrate.

The non-metallic pigments (NoP) are used to impart color characteristics to the polyurethane composition of the invention. Typically, these pigments alter appearance by selective absorption and /or by scattering of light.

Examples of the non-metallic pigments (NoP) include inorganic pigments, such as carbon black, iron oxides, manganese oxides, titanium dioxide, lead chromate and cadmium sulfide, and organic pigments such as those from the series of metal-free or metal-containing phthalocyanies, polycyclic dyes consisting of at least three rings and containing keto groups, such as the anthraquinoid and indigoid dyes, quinacridones, phthaloperinones, naphthaloperinones, phthalobenzimidazoles, naphthoylene-benzimidazoles, quinophth alones, naphthophthalones, metal-free and metal-containing monoazo, disazo and polyazo dyes, azomethine, polymethine, diarylmethane and triarylmethane dyes, azine, oxazine, thiazine and thiazole dyes.

Examples of white pigment available commercially include "Bayertitan" from Bayer; "Finntitan" from Kemira Oy, Vuorikemia; "Hombitan" from Sachtleben; "Kronos" from Kronos Titan; "Tibras" from Titanio do Brasil; "Tiofine" from TDF Tiofine BY; "Tiona" from SCM Chern.; "Tioxide" from Tioxide Group; "Tipaque" from Ishihara S.K.; "Tipure" from Du Pont; "Titafrance" from Thann et Mulhouse; and "Tronox" from Kerr McGee.

Examples of suitable black pigment available commercially include "Bayferrox 318 M" from Lanxess; and "Deanox" from Deanshanger Oxide Works. Other manufacturers include S.I.L.O., Columbian Chemical Company, and Miles. Particularly, preferred black pigment is "Bayferrox 318 M".

Preferably, the polyurethane composition of the invention further comprises non-metallic pigments (NoP), preferably, the amount of non-metallic pigments (NoP) is:
- in case of white non-metallic pigments less than 1 weight-%, preferably less than 0.75 weight-%, more preferably less than 0.5, more preferably less than 0.2, most preferably less than 0.1 weight-%;
- in case of black non-metallic pigments 0.15 - 0.75 weight-%, preferably 0.2 - 0.6 weight-%;
- in case of blue or green non-metallic pigments 0.3 - 2 weight-%, preferably 0.75 - 1.5 weight-%; and
- in case of other non-metallic pigments 0.75 - 2 weight-%, preferably 1.5 - 2 weight-%, based on total weight of the polyurethane composition.

### Dispersing Additive

Dispersing additives are stabilizing substances that are adsorbed onto the pigment surface via pigment-affinic groups (i.e. anchor groups with a high affinity for the pigment surface) and establish repulsive forces between individual pigment particles. Therefore, the main purpose of dispersing additives is to prevent particles flocculating by various mechanisms (electrostatic effects, steric effects).

Dispersing additives along with the wetting agents result in a fine and homogeneous distribution of solid particles in liquid media and ensure the long-term stability of such systems. These additives aid in stabilizing pigments (inorganic, organic and also effect pigments) and fillers. Good adsorption of the additive to the pigment surface is necessary for efficient stabilization. Further, dispersing additives can also solve flooding and floating problems.

Preferably, the polyurethane composition contains less than 5 weight-%, preferably less than 2 weight-%, preferably less than 1 weight-%, preferably less than 0.5 weight-%, preferably less than 0.2 weight-%, most preferably less than 0.1 weight-%, of a dispersing additive, based on total weight of the polyurethane composition.

Examples of some suitable commercially available dispersing agents are "Anti-Terra, Disperbyk-161" from Byk; Disperbyk-164" from Byk "Borchigen ND" from Borchers; "SerAdFA 601" from Servo; "Solsperse" from ICI; "Surfynol" from Air Products; Tamol and Triton from Rohm&Haas; and "Texaphor" from Henkel. Particularly, preferred dispersing additive is "Disperbyk-164".

### Rheology Additives / Rheology Modifiers

Rheology additives are used to improve the flow properties of the polyurethane composition of the present invention.

In case the viscosity of the mixed composition is too low it can be preferred if the composition contains 0.1 - 4 weight-%, preferably 0.5 - 3 weight-%, preferably 1 - 2 weight-%, of a rheology additive, based on total weight of the polyurethane composition.

A large number of rheological additives for solvent borne systems are commercially available. Hydrogenated castor oils, pyrogenic silica, and modified montmorillonite clays (organoclays, e.g., bentonite) are preferred.

Examples of some suitable commercially available rheology additives are "Acrysol RM-4" from Rohm & Haas; "Aerosil 200" from Degussa; "Arbothix" from J. RETTENMAIER & SOHNE GmbH; "BYK 7410ET" from BYK-Chemie GmbH ; "Bentone,Thixatrol from NL Industries, Inc.; "Talen 7200-20" from Kyoeisha; and "Tixogel" from Siidchemie. Particularly, preferred rheology additive is "BYK 7410ET".

Furthermore, the polyurethane composition of the invention may comprise one or more optional components selected from the group consisting of fillers, organic co-solvents, catalysts, flame retardants, biocides, stabilizers (against heat, light and UV radiation) and adhesion promoters.

Further, fillers may be used to serve multiple functions based on the type of filler used. Fillers may thicken the composition, support its structure, increase volume and also enhance the technical properties of the composition.

Preferably, the viscosity of the polyurethane composition 1 min - 90 min, preferably 2 min - 60 min, more preferably 5 min - 20 min, most preferably 5 min - 10 min after mixing is 2'500 - 20'000 mPa.s, preferably 3'000 - 15'000 mPa.s, more preferably 3'000-10'000 mPa.s, more preferably 3'000 - 9'500 mPa.s, most preferably 3'000 - 8'000 mPa.s, whereby the viscosity is measured at 23°C using a Brookfield DV-E viscometer at 100 rpm using spindle #6 for viscosities below 9500 mPa.s and spindle #7 for viscosities of 9500 mPa.s and above.

### Mixed Polyurethane Composition

Preferably, the polyurethane composition of the invention is a multicomponent composition i.e. the composition comprises two or more individual components). More preferably, the polyurethane composition of the invention is a two-component composition. In multicomponent or two component storage arrangements, the components are stored separately in order to avoid spontaneous reaction. The components may be assembled together as a package. For use, the components are combined with each other. When the components are mixed together the curing reactions begin. Therefore, the mixed composition is to be processed within the open time after mixing the components. Preferably, the composition is processed within two hours, preferably one hour, from mixing the components.

In one of the preferred embodiment of the invention, the polyurethane composition of the invention is a two-component composition (i.e. the composition is provided in the form of two-component storage package comprising a first component and a second component). In this storage arrangement, the first component comprises the polyol component (A) and all other additives including the metallic pigment, and the second component contains the hardener component (B) including a suspension aid (if required). The first component and the second components are stored separately and combined to form a mixed polyurethane composition of the invention. Mixing of the first component and the second component is performed just before use, i.e. before application to a substrate. The metallic pigment can be present in either of the first component and the second component. Preferably, the metallic pigment is present in the first component containing the polyol component A.

The other additives used in the first component are selected from the group consisting of fillers, rheology additives, dispersing additives, wetting agents, thixotropic agents, molecular sieve, catalysts, and other additional materials known to the persons skilled in the art.

Once the mixed polyurethane composition is prepared by combining the polyol component (A), the hardener component (B) and other additives, it will be necessary to apply the composition to a substrate within a reasonable time, preferably within two hours, more preferably within an hour, to prevent the composition from curing before application and creation of the pattern.

In an another preferred embodiment of the invention, the polyurethane composition of the invention is provided in the form of a multicomponent storage package. In this storage arrangement, the polyol component (A), the hardener component (B) and the non-metallic pigment (NoP) are provided in separate storage components, preferably three separate storage components. Thus, in this scenario the polyurethane composition of the invention is provided in the form of a kit containing different components. Further, these different components are combined to obtain the mixed polyurethane composition of the invention. Preferably, the metallic pigment is present with storage component containing the polyol component (A). Providing an additional component comprising non-metallic pigment (NoP) has the advantage to have more flexibility to create the final colour of the final cured product without having to adjust the composition of the other components.

### Application Method

The polyurethane composition of the invention is used to create concrete-like and wood-like patterns on cured polyurethane compositions that look like real concrete and wood respectively.

A further aspect of the present invention therefore relates to a method for applying a mixed polyurethane composition as described in detail above, preferably as a flooring material, wherein the method comprises the steps of:
a) providing a space where the polyurethane composition is applied;
b) mixing components (A) and (B) of the polyurethane composition to obtain a mixed polyurethane composition;
c) applying the mixed polyurethane composition on a desired location and in a desired shape within the space provided;
d) creating a pattern on the surface of the applied mixed polyurethane composition by contacting the applied mixed polyurethane composition with an object; and
e) allowing the applied mixed polyurethane composition cure.

For use, the polyol component (A) and the hardener component (B) are mixed with each other to prepare the mixed polyurethane composition. Thereafter, the mixed polyurethane composition is applied on a desired location and in a desired shape to create a flooring surface.

The space provided to apply the mixed polyurethane composition of the invention can be made of any convenient material selected from the group consisting of concrete, glass, gypsum board, metal, plastic, rubber, wood, and combinations thereof. Preferably, the space provided to apply the mixed polyurethane composition of the invention is made up from concrete or metal.

In the present invention, the pattern on the surface of the applied mixed polyurethane composition can be created by contacting the applied mixed polyurethane composition with an object selected from the group consisting of rake, comb, trowel, spatula, blade, roller, spray and other related instruments. Preferably, the object is selected from the group consisting of rake, comb, trowel and spatula.

Most preferably, if the creation of a concrete-like pattern is intended, the object is a trowel or spatula, preferably a trowel.

Most preferably, if the creation of a wood-like pattern is intended, the object is a rake or comb.

The pattern is created on the surface of the applied mixed polyurethane composition before the applied mixed polyurethane composition gets fully cured, preferably within one hour form the application of the mixed polyurethane composition.

Preferably, the pattern created on the surface of the applied mixed polyurethane composition is selected from the group consisting of wood-like pattern and concrete-like pattern, preferably a wood-like pattern.

In the above method for applying a mixed polyurethane composition, preferably, another mixed and uncured polyurethane composition is **not** mixed with and/or added to the mixed polyurethane composition of step b) before applying the mixed polyurethane composition of step b) on desired location and in a desired shape within the space provided in step c).

In the above method for applying a mixed polyurethane composition, preferably, another mixed and uncured polyurethane composition is **not** brought in contact with the applied mixed polyurethane composition of step c) before the applied mixed polyurethane composition of step c) has cured in step e).

In the above method for applying a mixed polyurethane composition, preferably, another mixed and uncured polyurethane composition is **not** brought in contact with the applied mixed polyurethane composition of step c) before creating a pattern on the surface of the applied mixed polyurethane composition by contacting the applied mixed polyurethane composition with an object in step d)

In the above method for applying a mixed polyurethane composition, it can be preferred if the object is inserted into the applied mixed polyurethane composition, preferably more than 20% of the thickness, preferably more than 40% of the thickness, preferably more than 60% of the thickness, more preferably more than 80%, most preferably more than 90% of the thickness of the applied mixed polyurethane composition. This is especially preferred if the creation of a wood-like pattern is intended. The object is preferably a rake or comb.

In the above method for applying a mixed polyurethane composition, preferably, in order to create the pattern of step d), the object is moved, preferably continuously, from one side of the applied mixed polyurethane composition, preferably in a unidirectional manner, to another to obtain a drawing line.

Preferably, the application temperature is e.g. from about 8 to 40°C, more preferably from about 10 to 30°C.

In a preferred embodiment, once the pattern is created on the surface of the applied mixed polyurethane composition, the surface of the applied mixed polyurethane composition settles to a flat or substantially flat state, while the metallic pigments (i.e. metallic effect pigments or pearlescent pigments) remain in the non-uniformly dispersed pattern created by the dragging action. The surface then cures (dries) over time on reaction of the polyol component (A) with the hardener component (B). Preferably, the applied mixed polyurethane composition is cured at a temperature of 15°C or more.

Preferably, the viscosity of the applied mixed polyurethane composition during the creation of the pattern in step d) is 2'500 - 20'000 mPa.s, preferably 3'000 - 15'000 mPa.s, more preferably 3'000 - 10'000 mPa.s, more preferably 3'000 - 9'500 mPa.s, most preferably 3'000 - 8'000 mPa.s, whereby the viscosity is measured at 23°C using a Brookfield DV-E viscometer at 100 rpm using spindle #6 for viscosities below 9500 mPa.s and spindle #7 for viscosities of 9500 mPa.s and above. Preferably, the viscosity of the applied mixed polyurethane composition during the creation of the pattern in step d) remains for 1 min - 90 min, preferably 2 min - 60 min, more preferably 5 min - 20 min, most preferably 5 min - 10 min, in the viscosity range mentioned before.

Preferably, the thickness of the cured polyurethane composition in step e) is 0.5 - 30 mm, preferably 1 - 20 mm, preferably 2-10 mm.

Preferably, the thickness of the cured polyurethane composition in step e) is 5 - 15 mm, more preferably 5-10 mm. This is especially preferred if the creation of ship decks is intended.

Preferably, the thickness of the cured polyurethane composition in step e) is 2 - 5 mm, more preferably 2-3 mm. This is especially preferred if the creation of floors is intended.

Further, the inventive polyurethane composition of the invention and the method for applying the mixed polyurethane composition of the invention can also be used to create sports floors, domestic floors, retail shops and offices, factory and showroom floors, swimming pools, shower and bathroom floors, and a wide range of architectural decorative purposes.

In an embodiment, the method for applying a mixed polyurethane composition, preferably, contains a step f) wherein the surface of the cured polyurethane composition of step e) is mechanically treated, preferably grinded, preferably 5 - 50 %, more preferably 10 - 20 %, of the thickness of the cured polyurethane composition is thereby removed. Particularly, this method is used to create floors and/or ship decks, especially ship decks.

In an embodiment, the mixed polyurethane composition of the invention is applied on a carrier, e.g. metal, wood and plastic, in order to obtain a pre-manufactured article that can be applied to a substrate in order to imitate wood or concrete.

In another embodiment, the mixed polyurethane composition of the invention is applied/casted in a form/mold and allowed to cure. Thereafter, the demolding of the cured mixed polyurethane composition is performed, to obtain a pre-manufactured article. The pre-manufactured article thus obtained can be applied to a substrate in order to imitate wood or concrete.

The substrate on which the pre-manufactured article is applied can be made of any convenient material selected from the group consisting of concrete, glass, gypsum board, metal, plastic, rubber, wood, and combinations thereof. Preferably, the substrate on which the pre-manufactured article is applied is made up from concrete.

The polyurethane composition of the invention is preferably used as a flooring material. More preferably, as flooring tiles or floor boards.

The polyurethane composition of the invention is preferably used as a casting material.

Further, it has been observed experimentally that the wood effect is more distinct in case the thickness of the cured polyurethane composition in step e) is 5 - 15 mm compared to thicknesses below 5 mm. This type of cured polyurethane composition (i.e. with thickness 5-15 mm) is ideally suited for production of ship decks.

Another aspect of the present invention relates to use of metallic pigments (MP) selected from the group consisting of metallic effect pigments (MPM) and pearlescent pigments (MPP) in a mixed polyurethane composition comprising:
A) a polyol component (A) comprising at least one polyol, and
B) a hardener component (B) comprising at least one polyisocyanate, to create concrete-like or wood-like appearing patterns on the surface of the mixed polyurethane composition upon, before curing of the polyurethane composition, creating a pattern on the surface of the applied mixed polyurethane composition by contacting the applied mixed polyurethane composition with an object.

In a preferred embodiment of the invention, the concrete-like or wood-like patterns on the surface of the mixed polyurethane composition of the invention are created by touching the surface of applied (or casted) mixed polyurethane composition with the object. Touching the surface of applied mixed polyurethane composition with the object causes disordering of the surface and creation of the pattern.

### Concrete-like Pattern

To obtain a concrete like pattern, preferably, the object has a surface contacting the surface of the applied or casted mixed polyurethane composition. The pattern is created when the object is touched, more preferably tapped, on the surface of the applied or casted mixed polyurethane composition. Preferably, the object is contacted with the mixed polyurethane composition before the mixed polyurethane compositions is cured. More preferably, within one hour of applying/casting the mixed polyurethane composition.

In a preferred embodiment of the invention, the concrete-like pattern on the surface of the mixed polyurethane composition of the invention is created by tapping the surface of the mixed polyurethane composition with the object. Tapping the surface of mixed polyurethane composition with the object causes disordering of the surface and creation of the pattern.

Preferably, the object is inserted into the applied mixed polyurethane composition to less than 20% of the thickness, preferably less than 10% of the thickness, most preferably not inserted into the applied mixed polyurethane composition.

Preferably, the object used to create the concrete-like pattern on the surface of the mixed polyurethane composition is flat and allows tapping. Preferably, the object has a surface area of more than 20 cm², preferably more than 40 cm² and preferably less 1000 cm², more preferably less than 600 cm².

Preferably, the object is a trowel.

### Wood-like Pattern

To obtain a wood-like pattern, preferably, the object is inserted into the applied mixed polyurethane composition, preferably more than 20% of the thickness, preferably more than 40% of the thickness, preferably more than 60% of the thickness, more preferably more than 80%, most preferably more than 90%, of the thickness of the applied mixed polyurethane composition.

Preferably, the object is moved, preferably continuously, from one side of the applied mixed polyurethane composition to another, preferably in a unidirectional manner, to obtain a drawing line. In case a comb/rake are used as an object, the drawing line consists of a set of drawing lines created by the teeth of the comb/rake.

More preferably, the object is moved continuously, preferably in a slightly irregular and slightly wavy manner, from one side of the applied mixed polyurethane composition to another to obtain a first drawing line, set of drawing lines respectively.

Preferably, the length of said drawing line, set of drawing lines respectively, obtained is more than 0,5 meter, more than 1 meter, more than 2 meters, more preferably more than 5 meters. Further, the length of said drawing line, set of drawing lines respectively, is preferably between 1 - 20 meters, between 2 - 10 meters, more preferably between 2-5 meters.

Preferably, the object is moved from one end of the applied mixed polyurethane composition to another end to obtain a first drawing line, set of drawing lines respectively. Following the first drawing line, set of drawing lines respectively, a second drawing line, set of drawing lines respectively, is created in the same way predominantly parallel to the first drawing line, set of drawing lines respectively, and so on. The starting point of the following drawing line can be either end of the applied mixed polyurethane composition.

Preferably, the expression "predominantly parallel to the drawing line" is understood in a way that the distance between the previous drawing line and the following drawing line is less than 5 cm, less than 4 cm, less than 3 cm, preferably less than 2 cm. In case a comb/rake are used as an object giving rise to sets of drawing lines, the distance between the closest drawing lines of the previous and the following set of drawing lines is less than 5 cm, less than 4 cm, less than 3 cm, preferably less than 2 cm.

In case a comb/rake are used as an object, it is further preferred that the before mentioned distance is less than 3 times, preferably less than 2 times, the average distance of the teeth of the comb/rake to each other.

The distance between the previous and the following drawing lines, previous and the following set of drawing lines respectively, is preferably such that they do not overlap with more than 50% of their width, preferably not overlap with more than 20% of their width, most preferably they do not overlap with their width.

Preferably, the object is rake or comb.

Surprisingly, it has been observed, that the deep insertion of object inside the surface of the casted mixed polyurethane composition creates a wood like pattern that does not only exist on the surface of the casted composition but also in the inner/deeper regions, essentially wherever the object was drawn through the casted composition. Hence, inserting the object deep into the casted composition is preferred in case upper parts of the cured composition have to be removed, e.g. in case damage occurred after casting.

### Sanding/Grinding

In an embodiment of the invention, sanding is performed on the surface of the applied/casted mixed polyurethane composition.

Preferably, sanding is performed by using a sand paper like material, or more preferably a sand paper with a corn size of preferably 40, preferably 24 and more preferably 16.

A skilled artisan will know that any other suitable means available in the art can also be used to perform sanding. For e.g. sanding machine

Preferably, sanding is performed to create even surfaces, if the viscosity of the casted composition is very high.

Sanding is particularly required if the top/upper surface of the applied/casted mixed polyurethane composition gets damaged after curing, for e.g. due to UV or mechanical stress.

Preferably, sanding is performed in creating ship decks.

### Top Coating

In an embodiment of the invention, an additional layer of a topcoat composition is applied on the patterned surface of the mixed polyurethane composition. Preferably, a two component polyurethane composition, preferably water based, preferably UV-stable, preferably transparent, preferably with a thickness of 10 - 100 µm.

Particularly, preferred example of the topcoat composition is Sikafloor-304 W available from Sika.

### Examples

Set out below are a number of examples which further illustrate the invention but are in no way intended to restrict the scope of the invention. Unless indicated otherwise, all proportions and percentages are by weight.

Raw materials used for preparing the polyurethane composition of the invention are:

| **Raw materials used** | **Description** | **Supplier** |
|---|---|---|
| SR3000 N (Sikafloor 3000) | 2K PU resin, aliphatic | Sika |
| SR 327 (Sikafloor 327) | 2K PU resin, aromatic | Sika |
| GM700 | 2K PU resin, aromatic | Sika |
| SR330 | 2K PU resin, aromatic | Sika |
| Chromal 1 | Flake shaped aluminium pigment | Eckart |
| STAPA metallic 501 | Aluminium pigment paste - non leafing | Eckart |
| MagnaPearl 1000 | Pearlescent pigments | BASF |
| MagnaPearl 2000 | Pearlescent pigments | BASF |
| MagnaPearl 4000 | Pearlescent pigments | BASF |
| P1420\|Papaya | Papaya pigment | Torginol, Inc. |
| Bayferrox 318 M | Black non-metallic pigment | Lanxess |
| TiO2 | White non-metallic pigment | Tronox |
| Disperbyk-164 | Dispersing additive | BYK-Chemie GmbH |
| Arbothix | Rheology Additive | J. RETTENMAIER & SÖHNE GmbH + Co KG |
| BYK 7410ET | Liquid rheology Additive (A Solution of a modified urea) | BYK-Chemie GmbH |
| GM700 | 2K PU resin | Sika |
| Sikafloor-304 W | Top coat composition | Sika |

### Preparation the mixed polyurethane composition (Generalized methodology)

A commercially available two component polyurethane composition SR3000N (available from Sika) is used to produce the mixed polyurethane composition of the invention. The polyol component (A) of the two component polyurethane composition SR3000N is manually stirred for a short time, then the polyol component (A) is mixed with the metallic effect pigment (papaya pigment). Further, dispersing additives, rheology additive and other additives are added to the polyol component A in suitable proportions to obtain a mixture. Subsequently, the hardener component (B) of the two component polyurethane composition SR3000N is added to the mixture containing the polyol component (A), metallic effect pigment and other additives. The resulting mixture is provided in a forced action mixer and stirred with a stirring speed of about 300 to 400 rpm to obtain the mixed polyurethane composition in homogenous form.

A number of examples of the mixed polyurethane compositions were prepared using this general procedure. In the Table 1 provided below the composition details of the mixed polyurethane compositions prepared are mentioned

| **Example** | **PU Resin type** | **Metallic Pigment** | **Non Metallic Pigment** | | **Rheology additive** | **Other** |
|---|---|---|---|---|---|---|
| Example 1 | SR3000N | 5 weight-% Chromal I (Particle size less than 71µm) | - | - | - | - |
| Example 2 | SR3000N | 5 weight-% STAPA metallic 501 (D₉₀ particle size 40-50 µm) | - | - | - | - |
| Example 3 | SR3000N | 2 weight-% MagnaPearl 1000, particle size 8-48 microns, rating ++ | 1 weight-% Blue NoP | - | - | - |
| Example 4 | SR3000N | 2 weight-% MagnaPearl 2000, particle size 5-25 microns, rating + | 1 weight-% Blue NoP | - | - | - |
| Example 5 | SR3000N | 2 weight-% MagnaPearl 4000, particle size 15-150 microns, rating + | 1 weight-% Blue NoP | - | - | - |
| Example 6 | SR3000N | 0.10 weight-% Papaya pigment | - | - | - | - |
| Example 7 | SR3000N | 0.20 weight-% Papaya pigment | - | - | - | - |
| Example 8 | SR3000N | 0.30 weight-% Papaya pigment | - | - | - | - |
| Example 9 | SR3000N | 0.40 weight-% Papaya pigment | - | - | - | - |
| Example 10 | SR3000N | 0.50 weight-% Papaya pigment | - | - | - | - |
| Example 11 | SR3000N | 0.60 weight-% Papaya pigment | - | - | - | - |
| Example 12 | SR3000N | 2 weight-% Papaya pigment | - | - | - | - |
| Example 13 | SR3000N | 5 weight-% Papaya pigment | - | - | - | - |
| Example 14 | SR3000N | 10 weight-% Papaya pigment | - | - | - | - |
| Example 15 | SR3000N | 1.1 weight-% MPP (Magnapearl 1000) | - | - | - | - |
| Example 16 | SR3000N | 1.1 weight-% MPP (Magnapearl 1000) | - | 0.1 weigh t-% Black NoP | - | - |
| Example 17 | SR3000N | 1.1 weight-% MPP (Magnapearl 1000) | - | 0.2 weigh t-% Black NoP | - | - |
| Example 18 | SR3000N | 2 weight-% MPM (Grey) | - | - | - | - |
| Example 19 | SR3000N | 2 weight-% MPM (Grey) | - | 1.1 weigh t-% White NoP | - | - |
| Example 20 | SR3000N | 2 weight-% MPM (Grey) | - | 2.2 weigh t-% White NoP | - | - |
| Example 21 | SR3000N | 2 weight-% Papaya pigment | - | - | - | 1 weight-% Flow dispersi ng additive |
| Example 22 | SR3000N | 2 weight-% Papaya pigment | - | - | 1 weight-% Arbothix | - |
| Example 23 | SR3000N | 2 weight-% Papaya pigment | - | - | 3 weight-% BYK 7410ET | - |
| Example 24 | SR3000N | 2 weight-% Papaya pigment | - | - | 1 weight-% BYK 7410ET | - |
| Example 25 | GM700 | 2 weight-% Papaya pigment | - | - | - | - |

### Example 1:

In a preferred embodiment of the present invention, the polyurethane composition of the invention has the following composition:
a) 5 weight-% of metallic effect pigment (MPM) Chromal I (aluminiumpulver) having maximum particle size 71 µm, pure MPM; and
b) SR3000N: a two component polyurethane composition available from Sika Chemie AG.

The mixed polyurethane composition of example 1 is prepared by using the general method for preparation of the mixed polyurethane composition as described above.

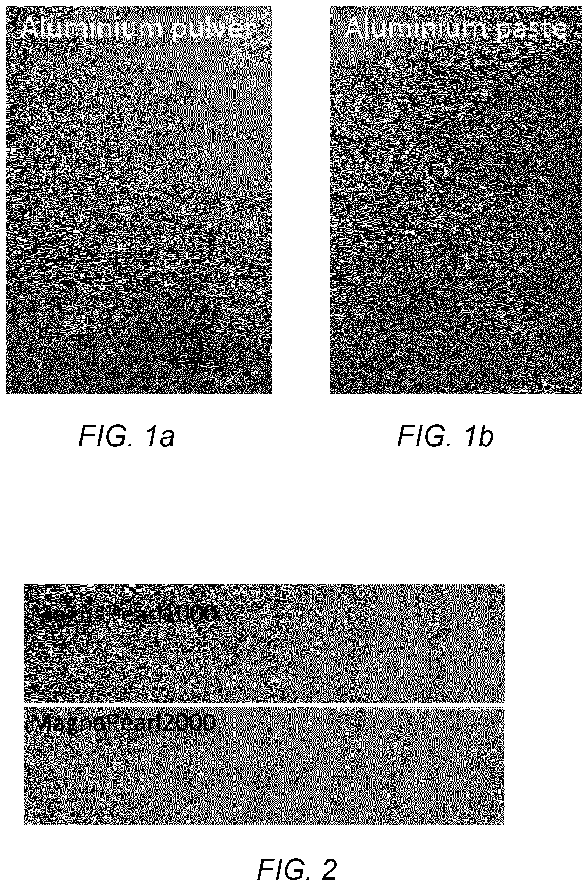

The actual photographic image of wood-effect created by the mixed polyurethane composition of example 1 is shown in Fig **1a****.**

### Example 2:

In another preferred embodiment of the present invention, the polyurethane composition of the invention has the following composition.
a) 5 weight-% of metallic effect pigment (MPM) STAPA metallic 501, D90 particle size 40-50 µm, pure MPM; and
b) SR3000N: a two component polyurethane composition available from Sika Chemie AG.

The mixed polyurethane composition of example 2 is prepared by using the general method for preparation of the mixed polyurethane composition as described above.

The actual photographic image of wood-effect created by the mixed polyurethane composition of example 2 is shown in Fig **1b****.**

### Effect of particle size of the metallic pigment on wood-effect

Wood-effect can be created by using the metallic pigments of varying particles sizes, however some sizes give better results than others.

The impact of particle size of the metallic pigment on wood-effect was studied by preparing the mixed polyurethane compositions of example 3, example 4 and example 5 by using the generalized methodology as described above.

The polyurethane composition of example 3, example 4 and example 5 were prepared by using the two component polyurethane composition SR3000N, 2 weight-% of MagnaPearl and 1 weight-% blue NoP. The polyurethane composition of example 3, example 4 and example 5 differs only in the size of the metallic pigment. The mixed polyurethane composition of example 3, example 4 and example 5 contains MagnaPearl 1000 (particle size 8 - 48 microns, rating++), MagnaPearl 2000 (particle size 5 - 25 microns, rating+) and MagnaPearl 4000 (particle size 15 - 150 microns, rating+) respectively. "+" indicates good results, "++" indicates even better results.

The photographic images depicted in Fig. **2** showcase wood-effect created by using the mixed polyurethane composition of example 3 (i.e. with MagnaPearl 1000) and the mixed polyurethane composition of example 4 (i.e. with MagnaPearl 2000). Further, it has been observed that the mixed polyurethane composition of example 3 (i.e. with MagnaPearl 1000) gives best results. The particle size of MagnaPearl 1000 is higher than MagnaPearl 2000 but lower than MagnaPearl 4000.

### Effect of Concentration of the metallic pigment on wood-effect

Wood-effect can be created by using the metallic pigments with varying concentration, however some concentrations give better results than others.

To study the effect of concentration of metallic pigment on wood-effect examples 6-14 were prepared by using the two component polyurethane composition SR3000N, papaya pigment (P1420|Papaya) with varying particle concentration. The details pertinent to different concentrations of the papaya pigment used to prepare example 6-14 are provided in Table 1.

Preferably, the viscosity of the mixed composition was between 3000 - 8000 mPa.s when drawing the pattern, except in the cases of example 13 (i.e. 10 weight-% papaya pigment) and example 14 (i.e. 10 weight-% papaya pigment). In these cases, the viscosity became higher than 8000 mPa.s making the casting (less flow) and drawing of pattern more difficult. Especially in the case of example 14, the final result was not even/plain any more.

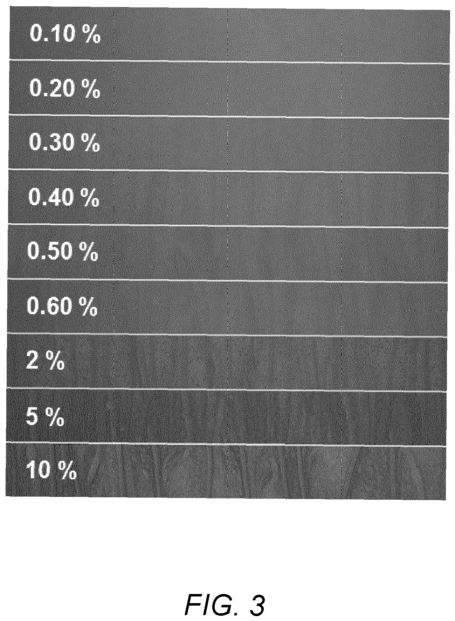

The photographic images of wood-effect created by using the mixed polyurethane compositions of example 6-14 containing papaya pigment with varying particle concentration is showcased in Fig. **3**.

To further understand the effect of concentration of the metallic pigment we have measured the flow, hardness and viscosity values of few mixed polyurethane compositions the details of which are provided in following Table:

| **Composition Detail** | **Flow (in cm)** | **Hardness Shore A** | | **Hardness Shore D** | | **Viscosity at 24 °C (in mPa.s)** |
|---|---|---|---|---|---|---|
| | | **Direct** | **15 sec** | **Direct** | **15 sec** | |
| SR3000N | 21.8 | 88 | 86 | 49 | 38 | 5110 |
| SR3000N + 1 weight-% Papaya pigment | 20.6 | 88 | 86 | 47 | 39 | 5850 |
| SR3000N + 2 weight-% Papaya pigment | 19.5 | 88 | 86 | 51 | 41 | 6920 |

The flow values were measured using a flow-plate on which 1 mL of the mixed polyurethane composition is placed. After completion of the curing, the length of the flow strip is measured with a ruler.

Further, hardness samples were cured overnight at 20°C and subsequently, 5 hours at 80°C. The hardness (shore A and shore D) was measured according to a procedure described in ASTM D2240, Test Method for Rubber Property -Durometer Hardness.

Viscosity was measured with a Brookfield DV-E viscometer using spindle 6.

### Effect of white and black Non-metallic pigment on wood-effect

The non-metallic pigments (NoP) are preferably added to the mixed polyurethane compositions of the invention. The effect of these non-metallic pigments, on wood-effect (i.e. wood-effect created by using the mixed polyurethane composition containing non-metallic pigments) was studied.

Firstly, the mixed polyurethane compositions of example 15, example 16 and example 17 were prepared by using the two component polyurethane composition SR3000N and 1.1 weight-% of MPP (Magnapearl 1000). The difference amongst example 15, example 16 and example 17 lies in the amount of black NoP used.

The mixed polyurethane composition of example 15 was prepared without using black NoP, whereas the polyurethane composition of example 16 and example 17 contains 0.1 weight-% and 0.2 weight-% of black NoP respectively, based on total weight of the mixed polyurethane composition.

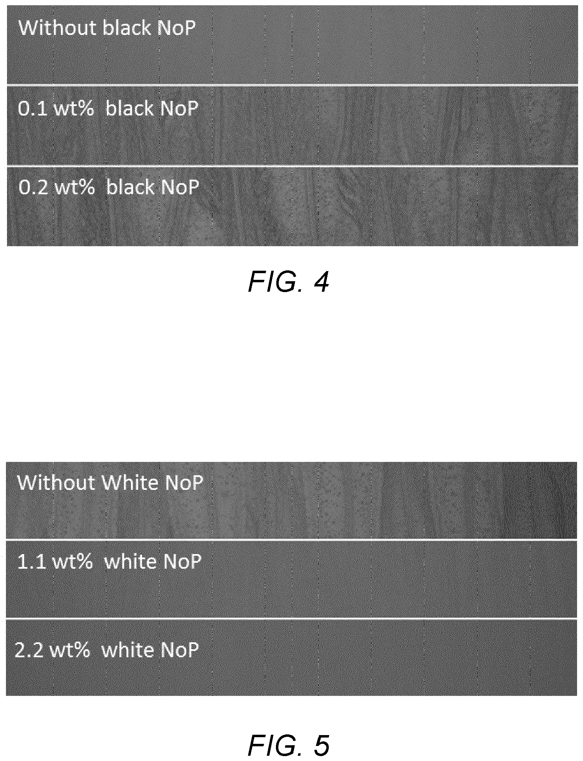

The photographic images of wood-effect created by using the mixed polyurethane composition of example 15 (i.e. without Black NoP), example 16 (i.e. with 0.1 weight-% Black NoP) and example 17 (i.e. with 0.2 weight-% Black NoP) are depicted in Fig. **4**.

It is evident from the Fig. **4** that the presence of black NoP improves the visibility of the wood-effect. Further, it can be concluded that wood-effect is hardly visible of MPP, if any additional pigment is not used.

The mixed polyurethane compositions of example 18, 19 and 20 were prepared by using the two component polyurethane composition SR3000N and 2 weight-% of MPM (Grey). The difference amongst the mixed polyurethane compositions of example 18, 19 and 20 lies in the amount of white NoP.

The mixed polyurethane composition of example 18 was prepared without using white NoP.

The mixed polyurethane composition of example 19 and 20 contains 1.1 weight-% and 2.2 weight-% of white NoP, based on total weight of the mixed polyurethane composition.

The photographic images of wood-effect created by using the mixed polyurethane composition of example 18 (i.e. without white NoP), example 19 (i.e. with 1.1 weight-% of white NoP) and example 20 (i.e. with 2.2 weight-% of white NoP) are depicted in Fig. **5**. It has been observed that wood-effect is visible in the surface created by using the mixed polyurethane composition of example 18 (i.e. without white NoP). But, in case of surfaces created by the mixed polyurethane compositions of example 19 (i.e. with 1.1 weight-% of white NoP) and example 20 (i.e. with 2.2 weight-% of white NoP) the wood-effect is not visible. Hence, it can be inferred that the white NoP masks wood-effect.

### Effect of Dispersing Additives on wood-effect

The dispersing additives are preferably added to the mixed polyurethane compositions of the invention to enhance stabilization. The presence of the dispersing additives in the mixed polyurethane composition of the invention also affects the viscosity of the mixed polyurethane composition. Presence or absence of dispersing additive in the mixed polyurethane composition has significant impact on wood-effect.

To study the effect of dispersing additive on wood-effect, the mixed polyurethane compositions of example 21 and example 12 were considered. The mixed polyurethane compositions of example 21 and example 12 contains the two component polyurethane composition SR3000N and 2 weight-% of papaya pigment. Further, the mixed polyurethane composition of example 21 additionally contains 1 weight-% of flow dispersing additive, based on total weight of mixed composition. Therefore, the difference between the mixed polyurethane composition of example 21 and example 12 lies in use of dispersive additive.

The use of dispersive additive in the mixed polyurethane composition of example 21 gives rise to a viscosity less than 2500 mPa.s, when making a pattern after five minutes of mixing. On the other hand, the viscosity of the mixed polyurethane composition of example 12 (i.e. without dispersing additive) is between the ranges of 3000-8000 mPa.s, when making a pattern after five minutes of mixing.

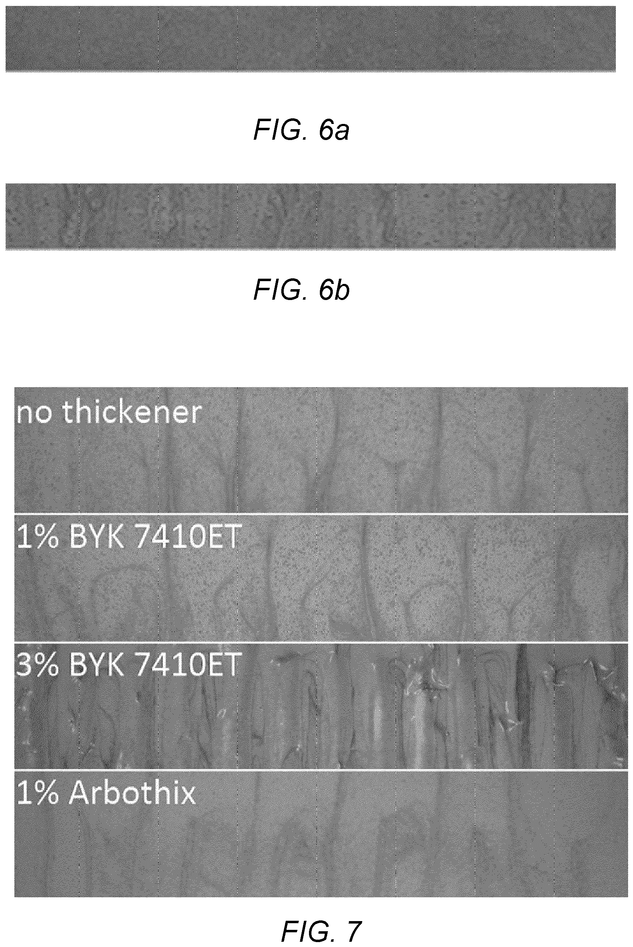

The photographic images of wood-effect created by using the mixed polyurethane composition of the example 21 (i.e. with dispersing additive) and example 12 (i.e. without dispersing additive) are depicted in the Fig. **6a** and Fig. **6b** respectively.

### Effect of Rheology Additives on wood-effect

The rheology additives are preferably added to the mixed polyurethane compositions of the invention to improve flow properties. The presence of the rheology additives in the mixed polyurethane composition of the invention affects the viscosity of the mixed polyurethane composition. Presence or absence of rheology additive in the mixed polyurethane composition has significant effect on wood-effect.

The mixed polyurethane composition of example 22, example 23 and example 24 were prepared by using the two component polyurethane composition SR3000N, 2 weight-% of metallic pigments (papaya) and rheology additive, based on total mixed composition.

The difference amongst the mixed polyurethane compositions of example 22, example 23 and example 24 lies in the type and concentration of rheology additive. As the mixed polyurethane composition of example 22, example 23 and example 24 contains 1 weight-% of rheology additive Arbothix, 3 weight-% of rheology additive BYK 7410ET and 1 weight-% of rheology additive BYK 7410ET respectively, based on total mixed composition.

The measured viscosity values of the mixed polyurethane composition of example 12, example 22, example 23 and example 24 were as follows:

| **Substrate composition** | **Description** | **Viscosity (5 minutes after mixing in mPa.s)** |
|---|---|---|
| Example 12 | SR3000N + 2% papaya (reference, without thickner or rheology additive) | 4120 |
| Example 22 | SR3000N + 2% papaya + 1% Arbothix | 6400 |
| Example 23 | SR3000N + 2% papaya + 3% BYK 7410ET | 11880 |
| Example 24 | SR3000N + 2% papaya + 1% BYK 7410ET | 5280 |

Viscosity is measured at 20°C using a Brookfield DV-E viscometer at 100 rpm using spindle #7

The photographic images of wood-effect created by using the mixed polyurethane compositions of example 12 (i.e. no thickener/Rheology additive) and example 22 - 24 are depicted in Fig. **7**.

### Storage stability

In the mixed polyurethane composition of the invention, preferably the metallic pigment is added to the polyol component. Therefore, it is of utmost importance to study the storage stability of polyol component containing the metallic pigment. To study the storage stability the polyurethane composition of example 12 was considered.

Firstly, the metallic pigment is added to the polyol component (A) of the polyurethane composition of example 12 and the mixture thus produced was stored at room temperature. Further, the viscosity behavior of the mixture (i.e. polyol component A and papaya pigment) with respect to time was studied, the results of which are provided in Table below:

| **Time (in days)** | **Temperatur e (in ∘C)** | **Viscosity (in mPa.s) of the polyol component (before mixing with hardener component)** | **spindle #** |
|---|---|---|---|
| 0 | 22 | 10840 | 7 |
| 1 | 21 | 11360 | 7 |
| 7 | 22 | 10560 | 7 |
| 14 | 22.5 | 10160 | 7 |
| 21 | 22 | 10680 | 7 |
| 28 | 21 | 11440 | 7 |

After measuring the viscosity values of the polyol component at different intervals of time, the hardener component (B) is added, mixed and samples were immediately casted. After five minutes of casting wood-effect is created. During the process, the viscosity of the casted composition is between 3000 - 8000 mPa.s .

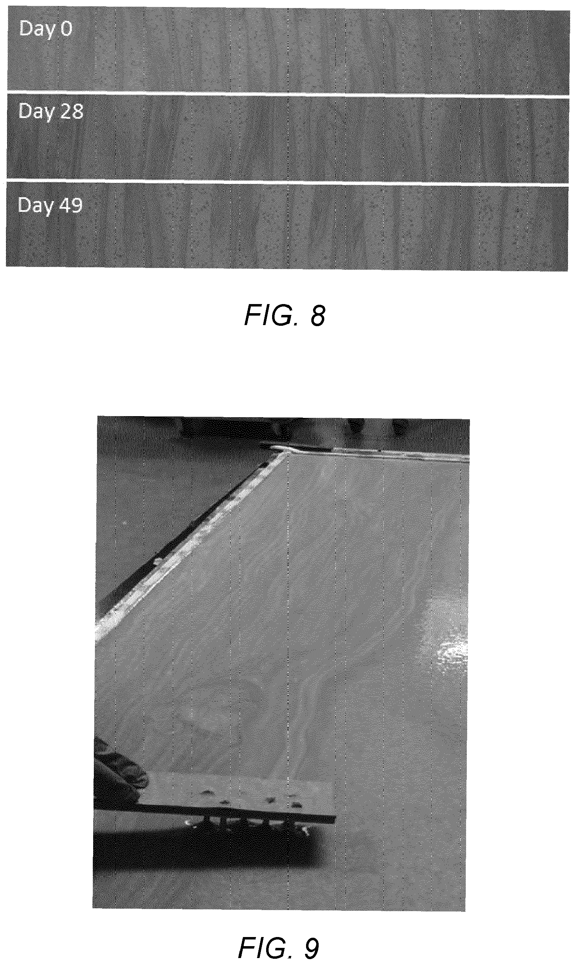

The photographic images of wood-effect created by using the mixed polyurethane composition of example 12 after 0, 28 and 49 days of storage is depicted the Fig. **8**.

Preferably, wood-effect is created by inserting the object into the applied mixed polyurethane composition, preferably more than 20% of the thickness, preferably more than 40% of the thickness, preferably more than 60% of the thickness, more preferably more than 80%, most preferably more than 90%, of the thickness of the applied mixed polyurethane composition.

In the Fig. **9****,** the photographic image for creation of wood-effect is depicted.

### Effect of sanding and/or topcoat on wood-effect

Tests were conducted to study the effect of sanding and/or topcoat on the wood effect created on the surface of the mixed polyurethane composition.

Firstly, wood boards were made with nine different colors. Each wood board contains a two component polyurethane composition (GM700) and 0.75 - 1 weight-% of one of the nine different non-metallic pigments (NoP).

For each color two different types of samples were prepared a first wood board sample and a second wood board sample. The overall composition of the first wood board sample and the second wood board sample are as provided below:
a) First woodboard sample: a two component polyurethane composition (GM700), 0.75 -1 weight-% of one of the nine different non-metallic pigments (NoP), based on the total mixed composition. This type of sample is called monocolor.
b) Second woodboard sample: a two component polyurethane composition (GM700), 0.75 -1 weight-% of one of the nine different non-metallic pigments (NoP) and 2 weight-% of metallic pigment (Magnapearl 1000), based on the total mixed composition.

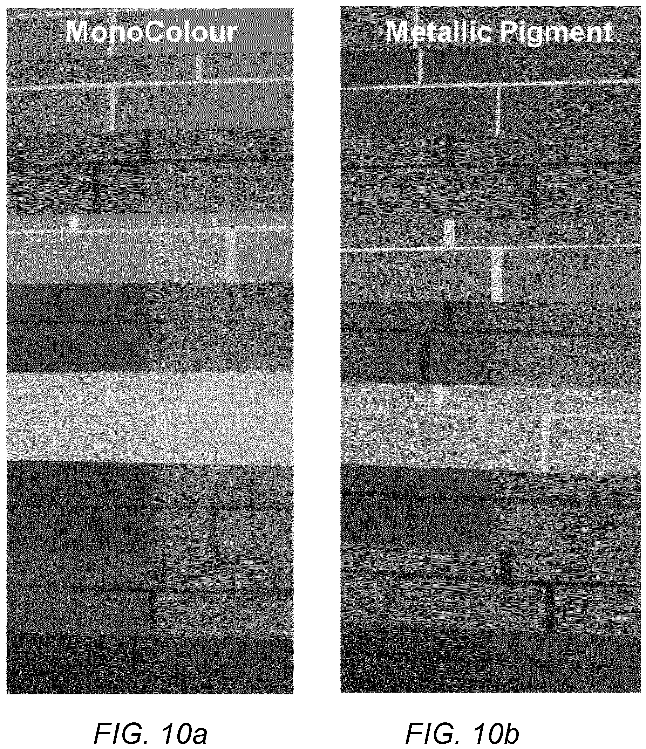

The photographic images of the first wood board sample (i.e. Monocolor or without metallic pigment) and the second woodboard sample (i.e. with the metallic pigment Magnapearl 1000) are depicted in the Fig. **10a** and Fig. **10b** respectively.

The metallic pigment Magnapearl 1000 was added to the polyol component (A) of the two component polyurethane resin (GM700). Subsequently the hardener component (B) of the two component polyurethane resin (GM700) is added and mixed to obtain a mixed polyurethane composition. The mixed polyurethane composition is poured on the surface (a A-4-size foil) and intended pattern is drawn on it by using a spatula. During the "drawing" the viscosity of the casted composition was between 3000 - 8000 mPa.s. The surface was cured for 1 day and lines were made using a milling cutter to create a floor board pattern. The milled lines were filled to the rim with the mixed polyurethane composition (or another polyurethane product) and cured for 1 day. After that, the whole surface is grinded to create a wood-effect.

To study the effect of sanding and/or topcoat. The half of the sample is grinded in the same direction as the lines in the pattern using a sand paper with a corn size of 16 micrometers. Additionally, a clear coating is applied using Sikafloor-304 W (Sika Germany) in a thickness of 50 µm.

It has been observed, surprisingly, that adding a top coat improves wood-effect of the sanded surfaces of the second samples (i.e. samples with MagnaPearl 1000). In striking contrast, a clear coating completely hides the pattern obtained by sanding the surfaces of the first samples (i.e. Monocolor samples without Magnapearl 1000).

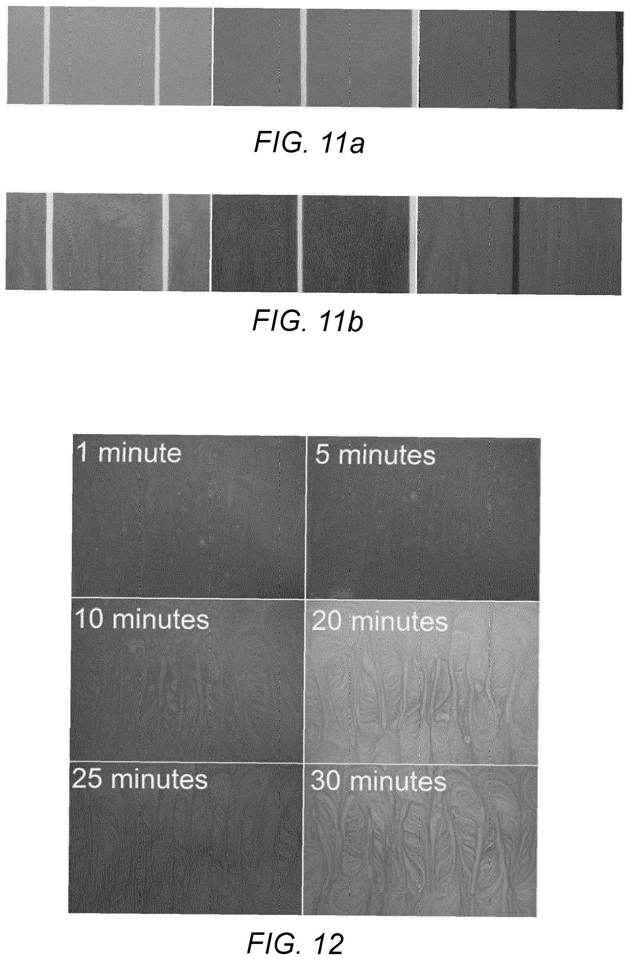

The photographic images of the same colored samples of the coated parts of the first sample (i.e. Monocolor samples without Magnapearl 1000) and coated parts of the second sample (i.e. samples with MagnaPearl 1000) are depicted in the Fig. **11a** and Fig. **11b** respectively.

### Effect of Viscosities

The viscosity of the mixed polyurethane composition plays pivotal role in the creation of realistic wood-like effect/pattern. To study the effect, a mixed polyurethane composition of example 25 was taken and its viscosity is measured at different intervals of time.

The mixed polyurethane composition of example 25 was prepared by using a two component polyurethane composition GM700 and 2 weight-% of metallic pigment (papaya) based on total mixed composition. The viscosity of the mixed polyurethane composition at room temperature was measured at the times indicated in the Table provided below:

| **Time (in min)** | **Viscosity (in MPa.s)** |
|---|---|
| 1 | 1600 |
| 5 | 2100 |
| 10 | 2800 |
| 20 | 5000 |
| 25 | 7000 |
| 30 | 9600 |

The samples of the mixed polyurethane composition of example 25 were poured on the surface (an A4-size foil). Immediately after casting, a spatula was used to draw the intended pattern. The sample of thickness 8 mm was cured for 1 day.

The results of wood-effect created by using the mixed polyurethane composition of example 25 with varying viscosities are depicted in Fig. **12****.**

It has been observed that wood-effect is not visible or effective, when the viscosity of the mixed polyurethane composition is below 2500 mPa.s. The mixed polyurethane composition with viscosity above 10000 mPa.s results in uneven surfaces that need subsequent processing, for example grinding in order to obtain even surfaces. Even though the higher viscosities are preferred due to more distinct wood tone effect, the higher viscosities bring the disadvantage of less flow and uneven surfaces.

The photographic images of wood-effect created by using the mixed polyurethane compositions of example 25 with varying viscosities are depicted in the Fig. **12****.**

Further, a similar experiment was performed using the mixed polyurethane composition of example 12. The viscosity of the mixed polyurethane composition of example 12 at room temperature was measured at the times indicated in the Table provided below

| **Time (min)** | **Viscosity (MPa.s)** |
|---|---|
| 1 | 3100 |
| 5 | 4300 |
| 10 | 4400 |
| 15 | 4500 |
| 25 | 5000 |
| 35 | 5600 |
| 45 | 6800 |
| 50 | 7600 |
| 55 | 9500 |
| 60 | 9600 |

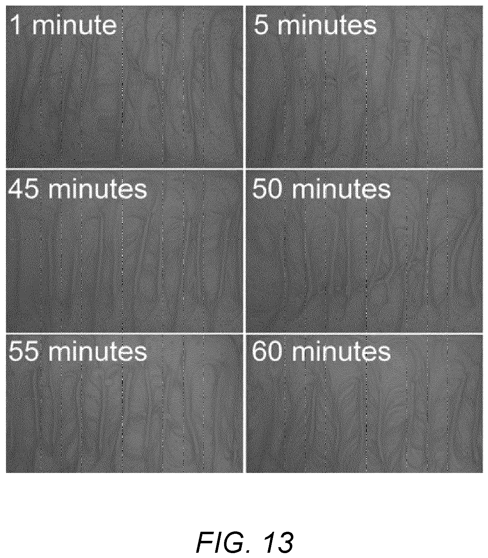

The photographic images of wood-effect created by using the mixed polyurethane composition of example 12 with varying viscosities are depicted in Fig. **13**.

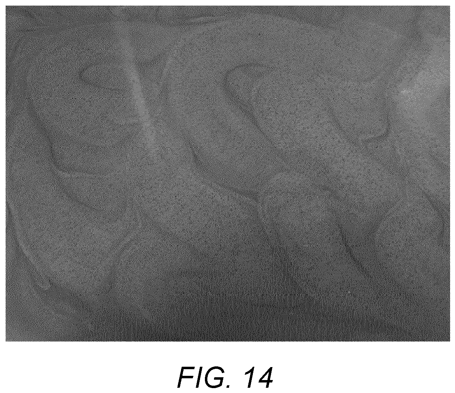

The photographic image of the concrete-like effect created by using the mixed polyurethane compositions of the invention is depicted in Fig. **14****.**

## Claims

1. A polyurethane composition comprising:
A) a polyol component (A) comprising at least one polyol; and
B) a hardener component (B) comprising at least one polyisocyanate,
whereby the polyurethane composition further comprises at least one metallic pigment (MP) selected from the group consisting of metallic effect pigments (MPM) and pearlescent pigments (MPP).

2. The polyurethane composition according to claim 1, wherein the amount of pearlescent pigments (MPP) is 0.15 - 7 weight-%, preferably 0.2 - 6 weight-%, more preferably 0.2 - 3, more preferably 0.3 - 2.5, most preferably 0.5 - 2 weight-%, based on total weight of the polyurethane composition.

3. The polyurethane composition according to any one of preceding claims, wherein the particle size of the pearlescent pigments (MPP) is from 2 - 300 µm, preferably 5 - 150 µm, most preferably 30 - 75 µm.

4. The polyurethane composition according to any one of preceding claims, wherein the polyurethane composition further comprises non-metallic pigments (NoP), preferably the amount of non-metallic pigments (NoP) is:
- in case of white non-metallic pigments less than 1 weight-%, preferably less than 0.75 weight-%, more preferably less than 0.5, more preferably less than 0.2, most preferably less than 0.1 weight-%;
- in case of black non-metallic pigments 0.15 - 0.75 weight-%, preferably 0.2 - 0.6 weight-%;
- in case of blue or green non-metallic pigments 0.3 - 2 weight-%, preferably 0.75 - 1.5 weight-%; and
- in case of other non-metallic pigments 0.75 - 2 weight-%, preferably 1.5 - 2 weight-%; based on total weight of the polyurethane composition.

5. The polyurethane composition according to any one of proceeding claims, wherein the viscosity of the polyurethane composition 1 min - 90 min, preferably 2 min - 60 min, more preferably 5 min - 20 min, most preferably 5 min - 10 min after mixing is 2'500 - 20'000 mPa.s, preferably 3'000 - 15'000 mPa.s, more preferably 3'000 - 10'000 mPa.s, more preferably 3'000 - 9'500 mPa.s, most preferably 3'000 - 8'000 mPa.s, whereby the viscosity is measured at 23°C using a Brookfield DV-E viscometer at 100 rpm using spindle #6 for viscosities below 9500 mPa.s and spindle #7 for viscosities of 9500 mPa.s and above.

6. The polyurethane composition according to any one of proceeding claims, wherein the molar ratio between free NCO-groups and NCO-reactive groups, preferably OH-groups, in the polyurethane composition before mixing is between 0.8 - 1.2, preferably 0.9 - 1.1.

7. A method for applying a mixed polyurethane composition according to any one of claims 1 to 6, preferably as a flooring material,
wherein the method comprises the steps of:
a) providing a space where the polyurethane composition is applied;
b) mixing components (A) and (B) of the polyurethane composition to obtain a mixed polyurethane composition;
c) applying the mixed polyurethane composition on a desired location and in a desired shape within the space provided;
d) creating a pattern on the surface of the applied mixed polyurethane composition by contacting the applied mixed polyurethane composition with an object; and
e) allowing the applied mixed polyurethane composition cure.

8. The method according to claim 7, wherein the object is inserted into the applied mixed polyurethane composition, preferably more than 20% of the thickness, preferably more than 40% of the thickness, preferably more than 60% of the thickness, more preferably more than 80%, most preferably more than 90% of the thickness of the applied mixed polyurethane composition.

9. The method according to claim 7 or 8, wherein, in order to create the pattern of step d), the object is moved, preferably continuously, from one side of the applied mixed polyurethane composition, preferably in a unidirectional manner, to another to obtain a drawing line.

10. The method according to claim 7 - 9, wherein the object is a rake or a comb.

11. The method according to claim 7 - 10, wherein the viscosity of the applied mixed polyurethane composition during the creation of the pattern in step d) is 2'500 - 20'000 mPa.s, preferably 3'000 - 15'000 mPa.s, more preferably 3'000 - 10'000 mPa.s, more preferably 3'000 - 9'500 mPa.s, most preferably 3'000 - 8'000 mPa.s, whereby the viscosity is measured at 23°C using a Brookfield DV-E viscometer at 100 rpm using spindle #6 for viscosities below 9500 mPa.s and spindle #7 for viscosities of 9500 mPa.s and above.

12. The method according to claim 7-11 to create floors and/or ship decks.

13. Use of the polyurethane composition according to any of claims 1-6 as a flooring material.

14. Use of the polyurethane composition according to any of claims 1-6 as a casting material.

15. Use of metallic pigments (MP) selected from the group consisting of metallic effect pigments (MPM) and pearlescent pigments (MPP) in a mixed polyurethane composition comprising:
A) a polyol component (A) comprising at least one polyol; and
B) a hardener component (B) comprising at least one polyisocyanate,
to create concrete-like or wood-like appearing patterns on the surface of the mixed polyurethane composition upon, before curing of the polyurethane composition, creating a pattern on the surface of the applied mixed polyurethane composition by contacting the applied mixed polyurethane composition with an object.
